# EUROPEAN PATENT APPLICATION

(11) **EP 3 460 674 A1**
(43) Date of publication of application: **27.03.2019**
(21) Application number: 18195999.0
(22) Date of filing: 21.09.2018
(51) Int. Cl.: G06F 16/74, G06F 16/54

(54) **APPARTUS, METHOD AND PROGRAM FOR DISPLAYING THUMBNAILS OF FISHEYE IMAGES**

(30) Priority: 22.09.2017 JP 2017182620
(71) Applicant: CANON KABUSHIKI KAISHA, Ohta-ku Tokyo 146-8501 (JP)
(72) Inventor: OSAWA, Takaharu, Ohta-ku, Tokyo 146-8501 (JP)
(74) Representative: Houle, Timothy James

(57) **Abstract**

An information processing apparatus includes a display control means configured to cause a display means to display thereon a thumbnail image of a captured image captured by an imaging means, and a reception means configured to receive a selection instruction for selecting the thumbnail image for causing the display means to display the captured image thereon. When causing the display means to display thereon a thumbnail image of a fisheye image captured with use of a fisheye lens together with information indicating that the thumbnail image is a thumbnail image corresponding to the fisheye image, the display control means causes the display means to display thereon a thumbnail image based on an image acquired by carrying out a distortion correction on the fisheye image.

## Description

### BACKGROUND OF THE INVENTION

### Field of the Invention

The present invention relates to an information processing apparatus, an imaging apparatus, an information processing method, and a program.

### Description of the Related Art

In recent years, monitoring camera systems using networks have been in widespread use. The monitoring cameras are used in a wide range of fields such as large-scale public institutions and mass retailers, and are available in a variety of functional features. For example, a 360-degree camera equipped with a 360-degree mirror or a circular fisheye lens is an imaging apparatus that images sceneries of entire surroundings, and conceivable uses thereof widely range from the monitoring camera to a robot navigation. Features of this camera include its capability to capture a fisheye image such as a 360-degree annular or circular fisheye image by one camera. Further, an image clipping function (de-warping) is also known regarding the 360-degree camera. The image clipping function clips an image at a specific position from the fisheye image, adjusts a distortion and a tilt of the fisheye image, converts the fisheye image into an optimum angle, and displays the fisheye image.

As a method for playing back an image captured and recorded by the monitoring camera, there is known a method that displays a list of images and plays back an image selected therefrom. In this method, when displaying the list of images, a thumbnail and associated information are displayed together therewith, thereby presenting a content of the recorded image easily recognizably to a user. Japanese Patent Application Laid-Open No. 2015-38640 discusses a technique that detects a specific person in a video image and displays a scene in which the specific person appears as a thumbnail when displaying a list of video contents.

However, there is such a problem that, if the fisheye image indicating the 360-degree annular view like an image captured by the 360-degree camera is displayed as a thumbnail, the display content is presented in a manner that makes it difficult for a user to recognize features of the image and therefore content of recorded images.

### SUMMARY OF THE INVENTION

The object of the present invention is to allow the user to easily recognize the original image from the thumbnail image.

According to a first aspect of the present invention, there is provided an information processing apparatus as specified in claims 1 to 12. According to a second aspect of the present invention, there is provided an imaging apparatus as specified in claim 13. According to a third aspect of the present invention, there is provided a method as specified in claim 14. According to a fifth aspect of the present invention, there is provided a program as specified in claim 15.

Further features of the present invention will become apparent from the following description of embodiments with reference to the attached drawings.

### BRIEF DESCRIPTION OF THE DRAWINGS

Fig. 1 illustrates an entire imaging system.
Fig. 2 illustrates a hardware configuration of the imaging system.
Fig. 3 illustrates a functional configuration of the imaging system.
Fig. 4 is a flowchart illustrating recording processing.
Figs. 5A and 5B illustrate processing for generating a thumbnail image.
Fig. 6 is a flowchart illustrating display control processing.
Fig. 7 illustrates a display example of a list screen.
Figs. 8A and 8B each illustrate one example of the thumbnail image.
Fig. 9 is a flowchart illustrating recording processing according to a second embodiment.
Fig. 10 is a flowchart illustrating recording processing according to a third embodiment.
Fig. 11 is a flowchart illustrating recording processing according to a fourth embodiment.

### DESCRIPTION OF THE EMBODIMENTS

In the following description, embodiments of the present invention will be described with reference to the drawings.

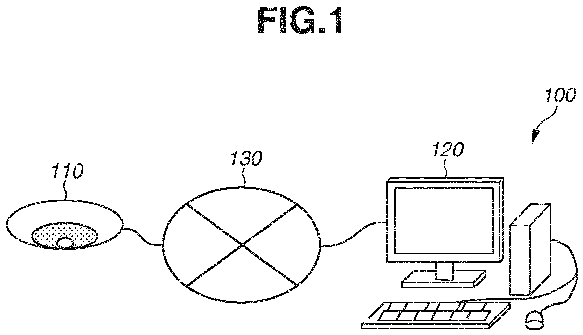

Fig. 1 illustrates an entire imaging system 100 according to a first embodiment. The imaging system 100 includes a monitoring camera 110 and a client apparatus 120. The monitoring camera 110 and the client apparatus 120 are connected communicably with each other via a network 130. The monitoring camera 110 includes a 360-degree mirror or a circular fisheye lens, and images sceneries of entire surroundings to capture a fisheye image such as a 360-degree annular or circular fisheye image. The monitoring camera 110 may be any camera that captures a fisheye image in a manner that a real space is distorted, and a configuration therefor is not limited to that described with reference to figures 1 to 3. Assume that the monitoring camera 110 is installed at a predetermined location. Examples of the location at which the monitoring camera 110 is installed include a ceiling, a top of a desk, and a wall. The client apparatus 120 transmits various kinds of commands such as a command for a camera adjustment to the monitoring camera 110. The monitoring camera 110 transmits responses to these commands to the client apparatus 120. The monitoring camera 110 does not have to image the entire surroundings/all directions, and may be any camera capable of capturing an image at a wider angle of view than a commonly used lens. The fisheye image may be any image captured in a more distorted manner than an image captured by the commonly used lens.

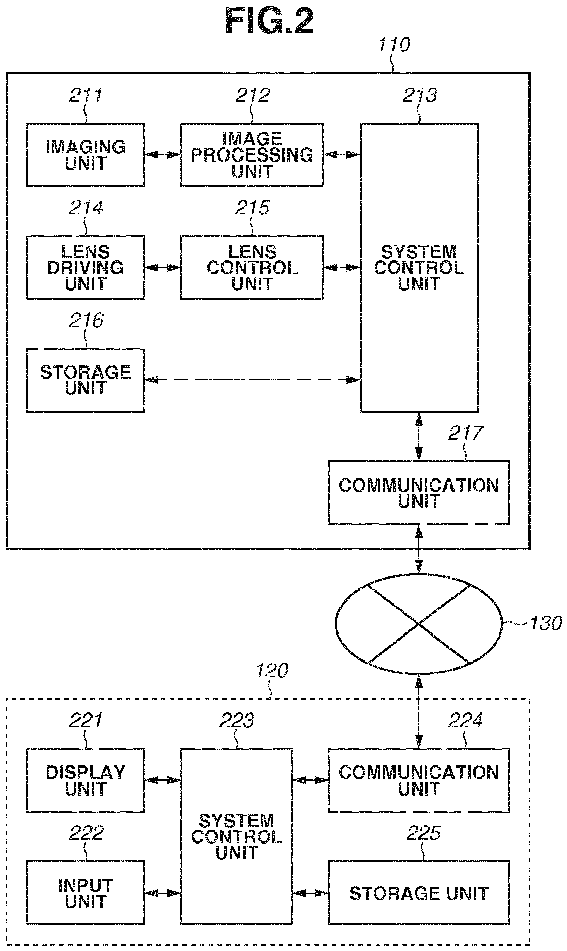

Fig. 2 illustrates a hardware configuration of the imaging system 100. First, the monitoring camera 110 will be described. The monitoring camera 110 is one example of an imaging apparatus. An imaging unit 211 includes a lens and an image sensor, and is in charge of imaging of a subject and a conversion into an electric signal. An image processing unit 212 performs predetermined image processing and compression coding processing on the signal imaged and photoelectrically converted by the imaging unit 211, thereby generating the fisheye image. In the present embodiment, the fisheye image is assumed to be a moving image, but may be a still image as another example. A communication unit 217 communicates with the client apparatus 120. The communication unit 217, for example, transmits generated image data to the client apparatus 120. Further, the communication unit 217 receives a camera control command transmitted from the client apparatus 120, and transmits the received command to a system control unit 213 which can, in turn, perform control of the monitoring camera 110 based on the received commands. The communication unit 217 also transmits a response to the command to the client apparatus 120.

The system control unit 213 includes a central processing unit (CPU), and controls the entire monitoring camera 110. A storage unit 216 includes an internal storage and an external storage, and a video image captured by the imaging unit 211 is recorded into these storages. Further, the storage unit 216 includes a read only memory (ROM) and a random access memory (RAM), and stores various kinds of information and a program therein. Functions and processing of the monitoring camera 110 that will be described below are realized by the system control unit 213 reading out the program stored in the storage unit 216 and executing the program.

The system control unit 213, for example, analyzes the transmitted camera control command and performs processing according to the command. The system control unit 213 also instructs the image processing unit 212 to adjust an image quality. The system control unit 213 also instructs a lens control unit 215 to control zooming and focusing. The lens control unit 215 controls a lens driving unit 214 based on the transmitted instruction. The lens driving unit 214 includes a driving system for a focus lens and a zoom lens of the imaging unit 211 and a motor serving as a driving source thereof, and an operation thereof is controlled by the lens control unit 215.

In the present embodiment, the image processing unit 212 is provided as different hardware from the system control unit 213. As another example, the monitoring camera 110 may not include the image processing unit 212, and the system control unit 213 may include similar functionality to that of the image processing unit 212 and may be able to perform the processing performed by the image processing unit 212.

Next, the client apparatus 120 will be described. The client apparatus 120 (information processing apparatus), might be a general-purpose computer, for example. A display unit 221 is, for example, a liquid crystal display device, and displays thereon the image acquired from the monitoring camera 110 and a graphical user interface (hereinafter referred to as a GUI) for controlling the camera. An input unit 222 is, for example, a pointing device such as a keyboard and a mouse. A user operates the GUI via the input unit 222. A communication unit 224 communicates with the monitoring camera 110.

A system control unit 223 includes a CPU, and controls the entire client apparatus 120. A storage unit 225 includes a ROM, a RAM, a hard disk drive (HDD) and the like, and stores various kinds of information and a program therein. Functions and processing of the client apparatus 120 that will be described below are realized by the system control unit 223 reading out the program stored in the storage unit 225 and executing the program. The system control unit 223, for example, generates the camera control command according to the user's GUI operation and transmits the generated command to the monitoring camera 110 via the communication unit 224. Further, the system control unit 223 also displays, on the display unit 221, the image data that is received from the monitoring camera 110 via the communication unit 224. In this manner, the client apparatus 120 can acquire the captured image of the monitoring camera 110 and perform various kinds of camera control via the network 130.

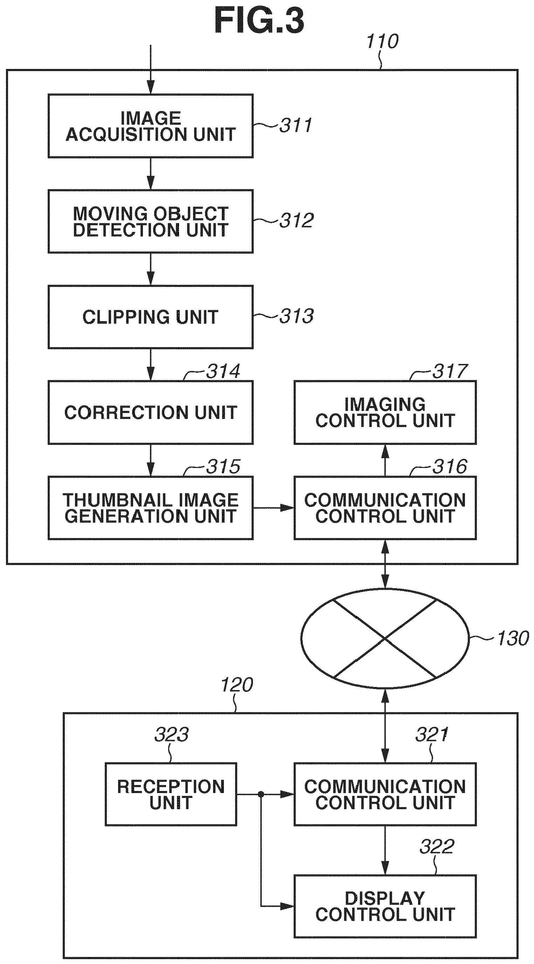

Fig. 3 illustrates a functional configuration of the imaging system 100. The functional units of figure 3 might be implemented as additional hardware to that illustrated in figure 2 or might be implemented as software modules on units and/or processors in respective apparatuses in the system 100. The functional units illustrated in figure 3 interact with units of figure 2 according to the following. An image acquisition unit 311 of the monitoring camera 110 acquires the fisheye image acquired by the image processing unit 212, and stores the acquired image into the storage unit 216. A moving object detection unit 312 detects a moving object in the fisheye image acquired by the image acquisition unit 311. More specifically, the moving object detection unit 312 detects the moving object by a method based on a background subtraction, which generates a background model from a video image in which only a background is imaged in advance, and detects the moving object from a difference between the generated background model and an input video image. The specific processing or method for detecting the moving object is not limited thereto. As another example, the moving object detection unit 312 may detect the moving object from a frame by acquiring a difference in image between adjacent two frames in the generated captured video image.

A clipping unit 313 clips a partial region of the fisheye image. More specifically, the clipping unit 313 clips a region in which the moving object is detected by the moving object detection unit 312. A correction unit 314 carries out a distortion correction on the partial region of the fisheye image clipped by the clipping unit 313 to remove fisheye distortion from the partial region of the fisheye image. The correction unit 314 performs, as the distortion correction, processing such as an adjustment of a distortion and a tilt of the clipped image and a conversion into an optimum angle. For example, the correction unit 314 performs the distortion correction using projective transformation. A thumbnail image generation unit 315 generates a thumbnail image based on the image on which the distortion correction has been carried out by the correction unit 314, and stores the generated thumbnail image into the storage unit 216 in association with the fisheye image from which the thumbnail image is clipped. A communication control unit 316 controls transmission and reception of information between the monitoring camera 110 and the client apparatus 120. An imaging control unit 317 controls the imaging carried out by the imaging unit 211 according to an instruction received from the client apparatus 120 via the communication control unit 316. The monitoring camera 110 may be configured in such a manner that at least one processing procedure among the processing procedures of the moving object detection unit 312, the clipping unit 313, the correction unit 314, and the thumbnail image generation unit 315 is performed by the image processing unit 212, which is the different hardware from the system control unit 213.

A communication control unit 321 of the client apparatus 120 controls the transmission and reception of information between the client apparatus 120 and the monitoring camera 110. A display control unit 322 controls the display on the display unit 221. A reception unit 323 receives information according to a user operation performed on the input unit 222. For example, the reception unit 323 can receive a command from a user concerning which fisheye image associated with a thumbnail image the user wishes to be displayed on display unit 221.

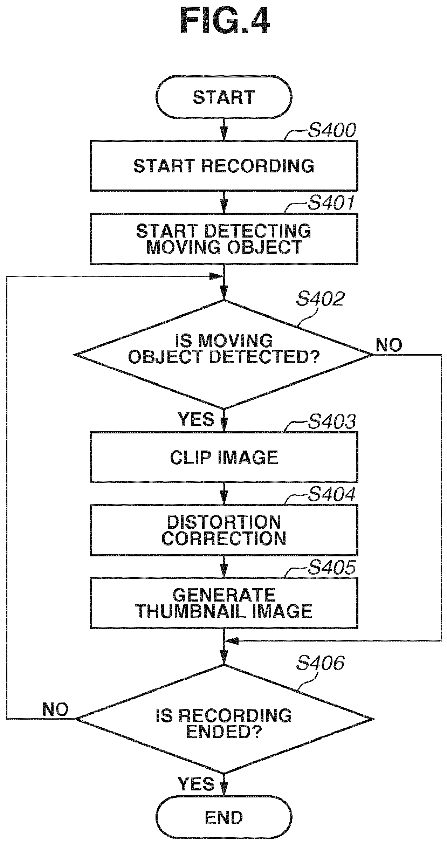

Fig. 4 is a flowchart illustrating recording processing performed by the monitoring camera 110. In step S400, the image acquisition unit 311 starts recording the video image (the fisheye image). More specifically, upon acquiring the fisheye image from the imaging unit 211, the image acquisition unit 311 stores the acquired image into the storage unit 216. Next, in step S401, the moving object detection unit 312 uses any suitable object detection and tracking technique to start detecting a moving object. The moving object detection unit 312 is configured to perform the moving object detection processing frame by frame based on a frame in the video image. The moving object detection unit 312 may be configured to perform the moving object detection processing at an interval of a plurality of frames. Next, in step S402, the moving object detection unit 312 confirms whether the moving object is detected. If the moving object detection unit 312 detects the moving object (YES in step S402), the processing proceeds to step S403. If the moving object detection unit 312 does not detect the moving object (NO in step S402), the processing proceeds to step S406.

In step S403, the clipping unit 313 clips or extracts, from an image or frame, a region in which the moving object is detected. Next, in step S404, the correction unit 314 carries out the distortion correction on the image clipped in step S403. Next, in step S405, the thumbnail image generation unit 315 generates the thumbnail image of the image on which the distortion correction has been performed in step S404. Then, the thumbnail image generation unit 315 stores the thumbnail image into the storage unit 216 in association with the fisheye image from which the thumbnail image is clipped. Next, in step S406, the system control unit 213 confirms whether the recording is ended. If the system control unit 213 does not confirm that the recording is ended (NO in step S406), the processing returns to step S402. If the system control unit 213 confirms that the recording is ended (YES in step S406), the recording processing is ended. The thumbnail image generated and stored in the above-described manner is associated with the fisheye image from which the thumbnail image is clipped, and is transmitted to the client apparatus 120 by the communication control unit 316. According to the processing illustrated in figure 4, a method of generating a thumbnail image is described, the method having steps of acquiring a fisheye image, applying fisheye correction to the acquired image to remove fisheye distortion from the acquired image, generating a thumbnail image based on the corrected image, and storing the thumbnail image and the acquired fisheye image, at least one of the thumbnail image and the acquired fisheye image being stored with information to indicate an association with the other image.

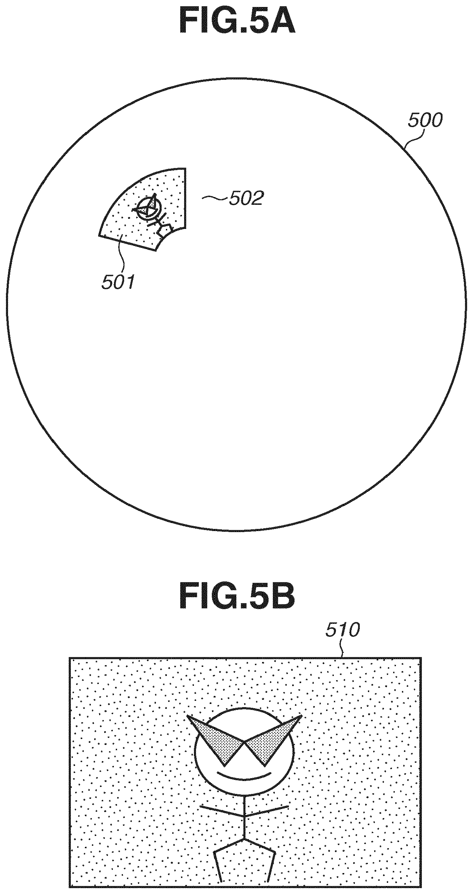

Figs. 5A and 5B illustrate processing for generating the thumbnail image. Assume that a moving object 501 is detected in a frame 500 of the fisheye image, as illustrated in Fig. 5A. In this case, an image of a region 502 containing the moving object 501 is clipped from the frame 500. Then, the distortion correction is carried out on the image of the region 502, and a thumbnail image 510 like an example illustrated in Fig. 5B is generated from the image on which the distortion correction has been performed.

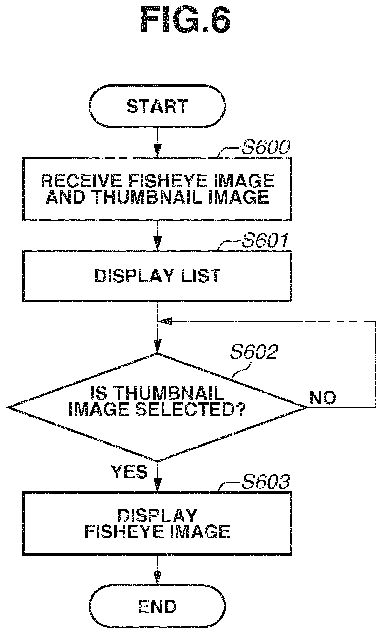

Fig. 6 is a flowchart illustrating display control processing performed by the client apparatus 120. In step S600, the communication control unit 321 receives the fisheye image and the thumbnail image associated with each other from the monitoring camera 110, and stores the received images into the storage unit 225. Assume that a plurality of thumbnail images is stored into the storage unit 225 by this processing. Next, in step S601, the display control unit 322 performs control so as to display a list screen indicating the thumbnail images stored in the storage unit 225 on the display unit 221. Next, in step S602, the reception unit 323 confirms whether an instruction to select the thumbnail image is received. When the user selects one thumbnail image among the plurality of thumbnail images displayed on the list screen, the reception unit 323 receives the selection instruction. The present processing is one example of reception processing. If the reception unit 323 receives the selection instruction (YES in step S602), the processing proceeds to step S603. In step S603, the display control unit 322 performs control so as to play back and display the fisheye image associated with the thumbnail image regarding the selection instruction. The display control processing is completed in this manner.

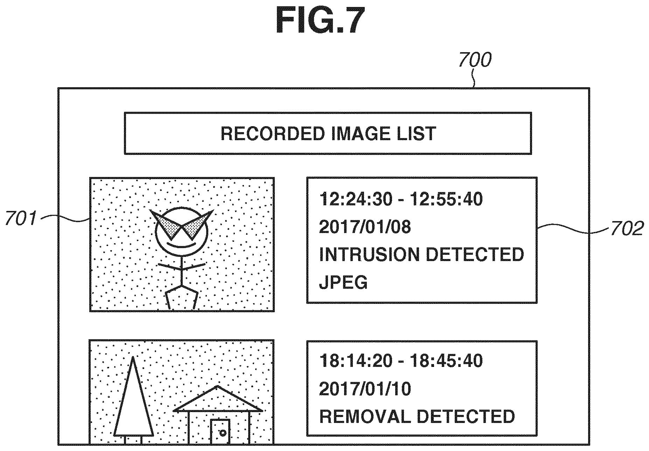

Fig. 7 illustrates a display example of a list screen 700. A plurality of thumbnail images 701 is displayed in a list form on the list screen 700. Further, a plurality of pieces of detailed information 702 is displayed in association with the thumbnail images 701. The detailed information 702 is information regarding the fisheye image, and is information indicating, for example, a date and time when the image is captured, and a detection content. The detailed information 702 can be any information that might help a user to make a decision as to which of the displayed recorded images to select for playback.

In this manner, the client apparatus 120 according to the first embodiment displays the thumbnail image generated from the fisheye image after the distortion correction. In other words, the client apparatus 120 displays an image that allows the user to easily recognize a feature of the fisheye image. This display allows the user to easily recognize the original image from the thumbnail image.

As a first modification example of the first embodiment, the client apparatus 120 may display the thumbnail image based on the fisheye image on which the distortion correction has been performed, and the display content of the thumbnail image is not limited to the above-described. The client apparatus 120 may display, for example, a thumbnail image of the entire fisheye image instead of the thumbnail image of the partial region of the fisheye image. For example, in a case where the region in which the moving object is detected accounts for more than 80% of the entire image (or a substantial part of the entire image) in the fisheye image, it is more desirable to display the thumbnail image indicating the entire fisheye image than displaying the thumbnail image indicating a part of the fisheye image. In this case, the correction unit 314 may divide the fisheye image into a plurality of regions as appropriate, and carry out the distortion correction on each of the regions. In this case, the thumbnail image generation unit 315, for example, combines images of the plurality of regions on which the distortion correction has been performed into one image, and generates a thumbnail image of the combined image. Images can be combined, for example, using a photo stitching method. Further, the client apparatus 120 may display a thumbnail image of a region indicating a feature other than the moving object. In this case, the monitoring camera 110 is configured to clip a region indicating a feature targeted for the display on the client apparatus 120 by detecting the feature using pattern matching instead of the moving object, and generate and record the thumbnail image.

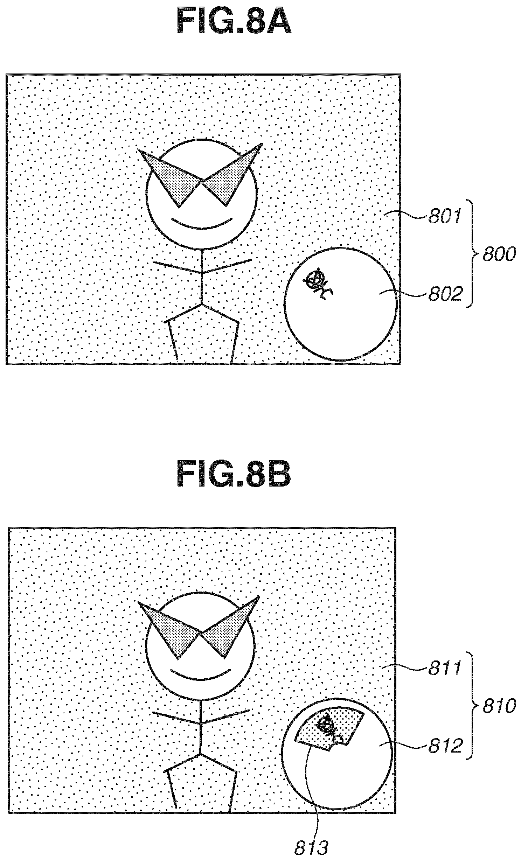

Further, as a second modification, the display control unit 322 of the client apparatus 120 or the thumbnail image generation unit 315 of the monitoring camera 110 may superimpose the image indicating the entire fisheye image on the thumbnail image corresponding to the partial region of the fisheye image. Figs. 8A and 8B each illustrate the thumbnail image on which the image of the entire fisheye image is superimposed. This image of the entire fisheye image is information indicating that this thumbnail is the thumbnail corresponding to the fisheye image. Besides that, a text "fisheye image" or an icon that allows this image to be identified as the fisheye image may be superimposed on the thumbnail as the information indicating that this thumbnail is the thumbnail corresponding to the fisheye image.

A thumbnail image 800 illustrated in Fig. 8A is an image in which a thumbnail image 802 of the entire fisheye image is superimposed on a thumbnail image 801 corresponding to the partial region of the fisheye image. A thumbnail image 810 illustrated in Fig. 8B is an image in which a thumbnail image 812 of the entire fisheye image is superimposed on a thumbnail image 811 corresponding to the partial region of the fisheye image, similarly to the thumbnail image 800. However, a frame line 813 representing a boundary position of the clipped region is drawn in the thumbnail image 812 in the thumbnail image 810. In both the cases, the thumbnail images 801 and 811 correspond to the image on which the distortion correction has been performed. Due to this display, the user can easily understand a positional relationship between the fisheye image and the thumbnail image. In this manner, the client apparatus 120 displays the entire fisheye image and the feature portion as the thumbnail images, by which the user can easily recognize whether the captured image corresponding to the thumbnail image is the fisheye image.

Further, generally, the processing for playing back and displaying the fisheye image imposes a heavier processing load than playing back and displaying an image that is not the fisheye image. Configuring the imaging system 100 according to the above-described can reduce a possibility that a wrong thumbnail is erroneously selected as the thumbnail corresponding to the fisheye image, thereby reducing the processing load on an apparatus. Above-described modifications can be implemented independently of each other.

Further, as a third modification, the client apparatus 120 may display the information indicating that the thumbnail image corresponds to the fisheye image while associating this information with the thumbnail image when displaying the thumbnail image corresponding to the fisheye image. More specifically, the monitoring camera 110 is configured to generate, as the thumbnail image, an image in which a mark and/or a character indicating that the original image thereof is the fisheye image is superimposed on the thumbnail image corresponding to the clipped image of the fisheye image, and transmit this image to the client apparatus 120. Due to this configuration, the client apparatus 120 can display the thumbnail image including the superimposed mark or the like indicating that the original image thereof is the fisheye image. Alternatively, as another example, the client apparatus 120 may display the information indicating that the original image thereof is the fisheye image in association with the thumbnail image as the detailed information.

Further, as a fourth modification, the timing at which the monitoring camera 110 records the fisheye image is not limited to the embodiment. As another example, the monitoring camera 110 may be configured to start the recording from the timing at which the moving image is detected. The monitoring camera 110 may be configured to further hold the fisheye image for a predetermined time period in a buffer in advance, and also store, into the storage unit 216, the fisheye image held in the buffer at the time point that the moving image is detected.

Further, as a fifth modification, the imaging system 100 may be configured in such a manner that the client apparatus 120 is able to perform functionality and processing described with respect to at least one of the moving object detection unit 312, the clipping unit 313, the correction unit 314, and the thumbnail image generation unit 315 of the monitoring camera 110. For example, the client apparatus 120 may perform control so as to acquire the fisheye image from the monitoring camera 110, detect the moving image, clip the target region, generate the thumbnail, and display the thumbnail in the list form.

An imaging system 100 according to a second embodiment detects an event such as abandoning of a detected object from the result of detecting the moving image, and generates and displays a thumbnail image according to the result of detecting the event. In the following description, the imaging system 100 according to the second embodiment will be described, focusing on differences from the imaging system 100 according to the first embodiment. The moving object detection unit 312 of the monitoring camera 110 not only detects the moving object but also detects a plurality of events such as the abandoning and tampering attempted on the monitoring camera 110. The moving object detection unit 312 detects the abandoning event if, for example, the moving object is kept to be placed (remains stationary) at a location or a predetermined location continuously for a predetermined time period (e.g. a detected object is left unattended for a predetermined period of time). Depending on an event type, the image (the frame) captured at the timing when the event is detected does not necessarily serve as the still image indicating the feature of this captured image (video image). For example, for the detection of the abandoning, a timing at which the object is abandoned (i.e., a timing earlier than the timing at which the abandoning is detected) is important, and it is desirable to use a still image captured at this timing as the image indicating the feature. Further, for the detection of the tampering, the feature may also be indicated more in a still image at a time point earlier than the time point at which the tampering is detected. The monitoring camera 110 according to the second embodiment generates the thumbnail image according to such a result of detecting the event.

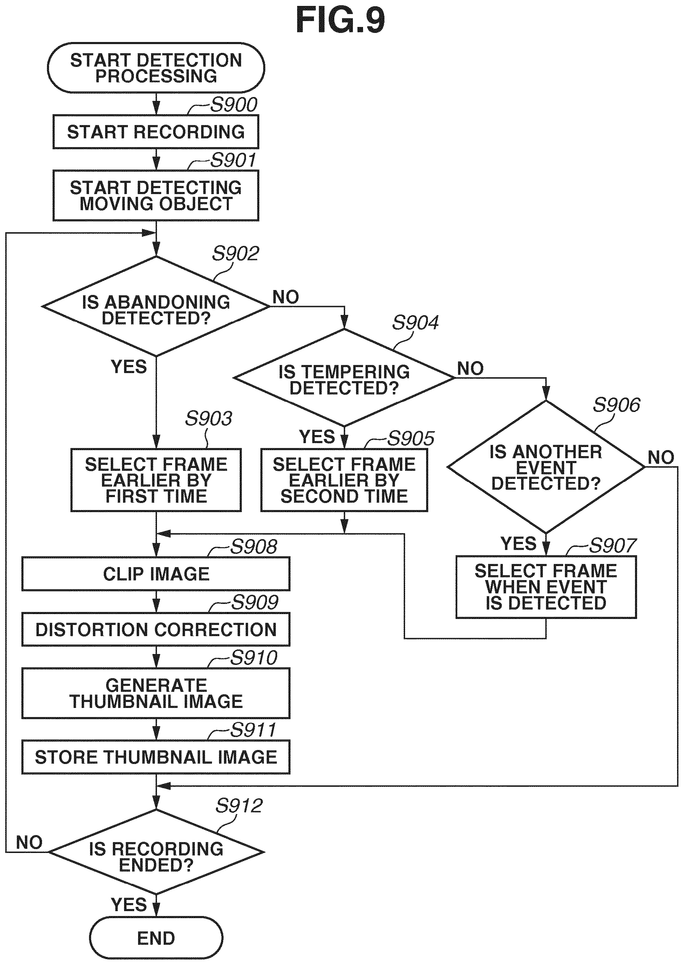

Fig. 9 is a flowchart illustrating recording processing performed by the monitoring camera 110. In step S900, the image acquisition unit 311 starts recording the video image (the fisheye image). Next, in step S901, the moving object detection unit 312 starts detecting the moving object. The processes of steps S900 and S901 are similar to the processes of steps S400 and S401 described with reference to Fig. 4, respectively. Next, in step S902, the moving object detection unit 312 confirms whether an event is detected based on the result of detecting the moving object. If the moving object detection unit 312 detects the abandoning or that an object has remained stationary for a predetermined period of time (YES in step S902), the processing proceeds to step S903. If the moving object detection unit 312 detects the tampering (NO in step S902 and YES in step S904), the processing proceeds to step S905. If the moving object detection unit 312 detects an event other than the abandoning and the tampering (NO in step S902, NO in step S904, and YES in step S906), the processing proceeds to step S907. If the moving object detection unit 312 detects none of the events (NO in step S902, NO in step S904, and NO in step S906), the processing proceeds to step S912.

In step S903, the clipping unit 313 selects a frame, for the clipping, that have been captured at the start of a first time i.e. the time period starting from the time at which the moving object detection unit 312 recognizes that the moving object became stationary and the time at which the moving object detection unit 312 detects that the object has remained stationary for the predetermined period of time. After that, the processing proceeds to step S908. Now, assume that the first time is a preset value. The first time is, for example, a value equal to a time period for which the abandoning state continues, which is required from the detection of the moving object until the abandoning is determined to occur (for example, 10 seconds). In step S905, the clipping unit 313 selects a frame, for the clipping, that have been captured at the start of a second time i.e. the time period between the moving object detection unit 312 detecting that an object is at a position within the image at which tampering with the monitoring camera 110 might occur (a tampering position) and the time at which the moving object detection unit 312 detects that the moving object remains in a tampering position for a predetermined period of time. After that, the processing proceeds to step S908. Now, assume that the second time is a preset value. The second time is, for example, a value equal to a time period required from the detection of the moving object until the tampering is determined to occur (for example, two seconds). In step S907, the clipping unit 313 selects, as the target for the clipping, the frame at the timing when the event is detected. After that, the processing proceeds to step S908. In step S908, the clipping unit 313 clips an image, targeting the frame selected in step S903, S905, or S907 for the processing. Processes of subsequent steps, steps S909 to S912 are similar to the processes of steps S404 to S406 (Fig. 4). A configuration and processing of the imaging system 100 according to the second embodiment other than the foregoing are similar to the configuration and the processing of the imaging system 100 according to the first embodiment.

In this manner, the monitoring camera 110 according to the second embodiment can generate a thumbnail image characteristic of the event by appropriately selecting the frame to be used as the thumbnail image according to the event type in a case where the event is detected. Further, the client apparatus 120 can display an appropriate thumbnail image corresponding to the event.

As a modification example, the thumbnail image of the captured image in which the event is detected may be any frame characteristic of the event, and is not limited to the above-described. As another example, the thumbnail image may be a thumbnail image generated from the entire frame that has been captured at the start of the first time or the second time without clipping. Alternatively, as another example, the monitoring camera 110 may generate the thumbnail image with use of a frame in which the moving object targeted for the detection is in focus among frames immediately before the event is detected.

An imaging system 100 according to a third embodiment generates a moving image for the thumbnail display (a thumbnail moving image) from a plurality of thumbnail images and displays this thumbnail moving image if the plurality of thumbnail images is generated from one fisheye image. In the following description, the imaging system 100 according to the third embodiment will be described, focusing on differences from the imaging systems 100 according to the other embodiments.

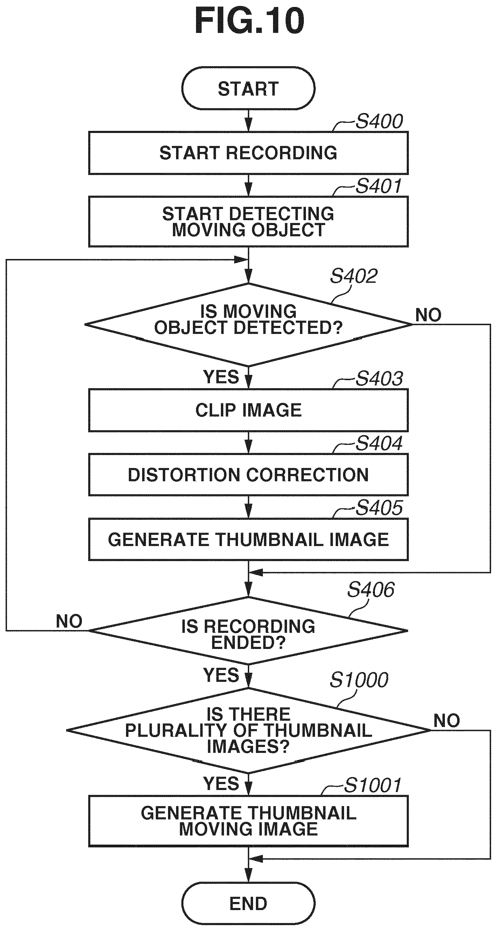

Fig. 10 is a flowchart illustrating recording processing performed by the monitoring camera 110 for generating a thumbnail moving image according to the third embodiment. The same step numbers are assigned to processes similar to the respective processes in the recording processing according to the first embodiment described with reference to Fig. 4, among individual processes in the recording processing illustrated in Fig. 10. In the third embodiment, if the system control unit 213 of the monitoring camera 110 confirms that the recording is ended in step S406 (YES in step S406), the processing proceeds to step S1000. In step S1000, the thumbnail image generation unit 315 confirms whether a plurality of thumbnail images is generated from one fisheye image. If the thumbnail image generation unit 315 generates a plurality of thumbnail images (YES in step S1000), the processing proceeds to step S1001. If the thumbnail image generation unit 315 does not generate a plurality of thumbnail images, i.e., generates one or no thumbnail image (NO in step SI000), the recording processing is ended.

In step S1001, the thumbnail image generation unit 315 generates one thumbnail moving image by combining the plurality of thumbnail images generated from the one fisheye image. Then, the thumbnail image generation unit 315 stores the generated thumbnail moving image into the storage unit 216 in association with the fisheye image. The recording processing is completed in this manner. Accordingly, the client apparatus 120 plays back and displays the thumbnail moving image on the list screen. A configuration and processing of the imaging system 100 according to the third embodiment other than the foregoing are similar to the configurations and the processing of the imaging systems 100 according to the other embodiments.

In this manner, the monitoring camera 110 according to the third embodiment generates the thumbnail moving image into which the plurality of thumbnail images is combined. Then, the client apparatus 120 plays back and displays the thumbnail moving image. With such a display, before playing back and displaying the fisheye image, the user can confirm the content of this fisheye image by viewing the playback display of the corresponding thumbnail moving image.

An imaging system 100 according to a fourth embodiment generates a thumbnail moving image by combining (superimposing) the thumbnail image indicating the partial region clipped from the fisheye image and the thumbnail image indicating the entire fisheye image, and displays the generated thumbnail moving image. In the following description, the imaging system 100 according to the fourth embodiment will be described, focusing on differences from the imaging systems 100 according to the other embodiments.

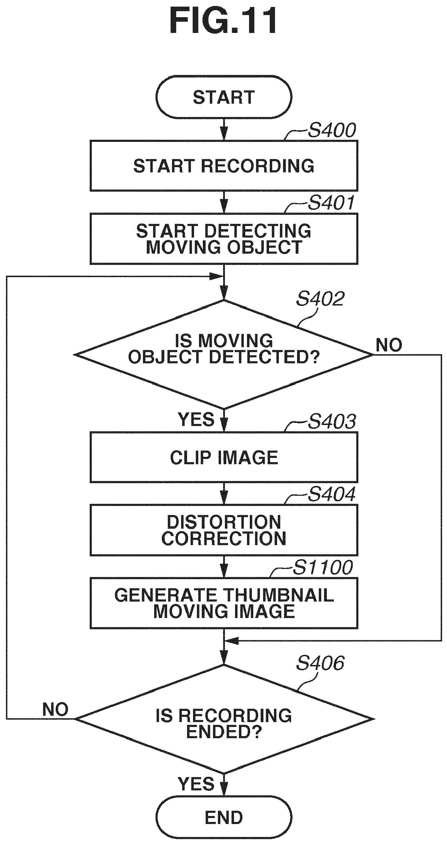

Fig. 11 is a flowchart illustrating recording processing performed by the imaging system 100 according to the fourth embodiment. The same step numbers are assigned to processes similar to the respective processes in the recording processing according to the first embodiment described with reference to Fig. 4, among individual processes in the recording processing illustrated in Fig. 11. In the fourth embodiment, the system control unit 213 of the monitoring camera 110 performs control in such a manner that the processing proceeds to step S1100 after the process of step S404. In step S1100, the thumbnail image generation unit 315 generates the thumbnail image of the image clipped from the frame in which the moving object is detected and subjected to the distortion correction. The thumbnail image generation unit 315 also generates the thumbnail image indicating the entire frame in which the moving object is detected. Then, the thumbnail image generation unit 315 generates one thumbnail moving image by combining the thumbnail image of the image clipped from the frame and the thumbnail image indicating the entire frame. Then, the thumbnail image generation unit 315 stores the thumbnail moving image into the storage unit 216 in association with the fisheye image. The recording processing is completed in this manner. Accordingly, the client apparatus 120 plays back and displays the thumbnail moving image on the list screen. A configuration and processing of the imaging system 100 according to the fourth embodiment other than the foregoing are similar to the configurations and the processing of the imaging systems 100 according to the other embodiments.

In this manner, the monitoring camera 110 according to the fourth embodiment generates the thumbnail moving image by combining the thumbnail image indicating the partial region clipped from the fisheye image and the thumbnail image indicating the entire fisheye image. Then, the client apparatus 120 plays back and displays the thumbnail moving image. With such a display, before playing back and displaying the fisheye image, the user can confirm the content of this fisheye image by viewing the playback display of the moving image including the corresponding thumbnail and the thumbnail indicating the entire fisheye image.

The embodiments of the present invention have been described above in detail. However, the present invention is not limited to the embodiments and can be modified and changed in various manners within the range of the spirit of the present invention set forth in the claims.

### (Other Embodiments)

According to each of the above-described embodiments, the present invention can allow the user to easily recognize the original image from the thumbnail image. Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to embodiments, it is to be understood that the invention is not limited to the disclosed embodiments. The scope of the following claims is to be accorded the broadest interpretation so as to encompass all such modifications and equivalent structures and functions.

## Claims

1. An information processing apparatus comprising:
display control means for causing display means to display thereon a thumbnail image of a captured image captured by imaging means; and
reception means for receiving a selection instruction for selecting the thumbnail image for causing the display means to display the captured image thereon,
wherein, when causing the display means to display thereon a thumbnail image of a fisheye image captured with use of a fisheye lens, the display control means causes the display means to display thereon a thumbnail image based on an image acquired by carrying out a distortion correction on the fisheye image together with information indicating that the thumbnail image is a thumbnail image corresponding to the fisheye image.

2. The information processing apparatus according to claim 1,
wherein the fisheye image is a moving image, and
wherein the display control means causes the display means to display thereon a thumbnail image corresponding to one frame contained in the fisheye image.

3. The information processing apparatus according to claim 2, wherein the display control means causes the display means to display thereon a thumbnail image corresponding to a frame in which a moving object is detected.

4. The information processing apparatus according to claim 2, wherein the display control means causes the display means to display thereon a thumbnail image corresponding to a frame according to a timing at which an event is detected.

5. The information processing apparatus according to claim 2, wherein the display control means causes the display means to display thereon a thumbnail image corresponding to a partial region of the one frame contained in the fisheye image.

6. The information processing apparatus according to claim 5, wherein the display control means causes the display means to display thereon a thumbnail image corresponding to a region in which a moving object is detected.

7. The information processing apparatus according to claim 5, wherein the display control means causes the display means to display thereon an image in which a thumbnail image corresponding to the entire frame is superimposed on the thumbnail image corresponding to the partial region of the frame.

8. The information processing apparatus according to claim 5, wherein the display control means causes the display means to display thereon a thumbnail moving image including the thumbnail image corresponding to the partial region of the frame and a thumbnail image corresponding to the entire frame.

9. The information processing apparatus according to claim 2, wherein the display control means causes the display means to display thereon a thumbnail moving image including a plurality of thumbnail images respectively corresponding to a plurality of frames contained in the fisheye image.

10. The information processing apparatus according to claim 9, wherein the display control means causes the display means to display thereon the thumbnail moving image including a plurality of thumbnail images respectively corresponding to a plurality of frames in which a moving object is detected.

11. The information processing apparatus according to claim 1, wherein the display control means causes the display means to display thereon a thumbnail moving image including a thumbnail image corresponding to a region of the fisheye image in which a moving object is detected and a thumbnail image corresponding to the entire fisheye image.

12. The information processing apparatus according to claim 1, wherein the display control means causes the display means to display thereon the captured image corresponding to the thumbnail image selected by the selection.

13. An imaging apparatus comprising:
correction means for correcting a distortion of a fisheye image captured with use of a fisheye lens;
generation means for generating a thumbnail image of the fisheye image on which the distortion correction is carried out; and
storing means for storing the thumbnail image into storage means in association with the fisheye image, the thumbnail image including information indicating that the thumbnail image is a thumbnail image corresponding to the fisheye image.

14. An information processing method comprising:
performing display control of causing display means to display thereon a thumbnail image of a captured image captured by imaging means; and
receiving a selection instruction for selecting the thumbnail image for causing the display means to display the captured image thereon,
wherein the display control includes, when causing the display means to display thereon a thumbnail image of a fisheye image captured with use of a fisheye lens, causing the display means to display thereon a thumbnail image based on an image acquired by carrying out a distortion correction on the fisheye image.

15. A program for causing a computer to function as each of the units of the information processing apparatus according to any one of claims 1 to 12.
